Europäisches Patentamt

European Patent Office

Office européen des brevets

(19)

(11) Veröffentlichungsnummer: **0 160 828**

**A1**

(12) # EUROPÄISCHE PATENTANMELDUNG

(21) Anmeldenummer: **85103799.4**

(22) Anmeldetag: **29.03.85**

(51) Int. Cl.⁴: **F 16 K 1/226**

(30) Priorität: **10.04.84 DE 8411124 U**

(43) Veröffentlichungstag der Anmeldung:
**13.11.85 Patentblatt 85/46**

(84) Benannte Vertragsstaaten:
**DE FR GB IT NL**

(71) Anmelder: **Brücken, Ferdi W.**
**Küstriner Strasse 2**
**D-5063 Overath(DE)**

(72) Erfinder: **Brücken, Ferdi W.**
**Küstriner Strasse 2**
**D-5063 Overath(DE)**

(74) Vertreter: **Dipl.-Ing. H. Marsch Dipl.-Ing. K. Sparing**
**Dipl.-Phys.Dr. W.H. Röhl Patentanwälte**
**Rethelstrasse 123**
**D-4000 Düsseldorf(DE)**

(54) **Armatur für fluidführende Leitungen.**

(57) Die Armatur für fluidführende Leitungen umfaßt ein Gehäuse [42] und ein in diesem schwenkbares Absperrglied [24], dessen Dichtfläche die Form eines schrägliegenden Ausschnitts aus einem Konus aufweist. Die kreisrund gefertigte Dichtungsanordnung wird beim Schließen des Absperrorgans elliptisch verformt. Der Ventilsitz ist dabei so ausgebildet, daß er einfach zu fertigen ist und eine geringe radiale Ausladung aufweist.

FIG. 2

EP 0 160 828 A1

# Armatur für fluidführende Leitungen

---

Die Erfindung betrifft eine Armatur für fluidführende Leitungen mit einem Gehäuse und einem in diesem beweglich angeordneten Absperrorgan, das eine konische Dichtfläche aufweist, sowie mit einem in einer Ringnut des Gehäuses angeordneten Dichtungselement in Ringform, bestehend aus einem im Gehäuse festgelegten Fußabschnitt, einem elastisch deformierbaren Zwischenstück und einem eine Dichtungsgarnitur aufweisenden Kopfabschnitt.

Eine Armatur, die diese Merkmale aufweist, ist in der EP-A-84 30 1121.4 beschrieben und dargestellt. Bei dieser bekannten Armatur ist ein Dichtungsring aus Elastomer in einen Trägerring in Form eines Drehteils mit etwa S-förmigem Querschnitt eingesprengt, von dem eine sich radial erstreckende Fußteilverlängerung zwischen Gehäuseabschnitten eingeklemmt ist.

Das elastisch deformierbare Zwischenstück ist erforderlich, weil bei bestimmten Armaturen, nämlich Dorsselklappen vom sogenannten "Butterfly"-Typ, die konische Dichtfläche des Absperrorgans elliptische Umfangsform hat, in die beim Schließen der Armatur das Dichtungselement zu verformen ist.

Bei der bekannten Armatur hat das Dichtungselement eine sehr große radiale Ausladung, so daß das Gehäuse einen entsprechend großen Durchmesser relativ zum Durchflußquerschnitt aufweisen muß. Ferner ist die Fertigung des Dichtungselements insbesondere bei großen Nennweiten aufwendig.

0160828

Aufgabe der vorliegenden Erfindung ist es, die Armatur mit den eingangs genannten Merkmalen derart auszubilden, daß die radiale Ausladung relativ zum Durchflußquerschnitt möglichst gering ist und das Dichtungselement mit geringem Aufwand gefertigt werden kann.

Die erfindungsgemäß vorgesehene Lösung dieser Aufgabe besteht darin, daß das Zwischenstück faltenbalgartig ausgebildet ist. Ein solches Zwischenstück kann aus Blech mit geringem Aufwand gefertigt werden und dann vorzugsweise durch Schweißung mit dem Kopf- und dem Fußabschnitt verbunden werden, welche Teile ihrerseits sehr einfach gestaltet sein können.

Dabei ist es besonders bevorzugt, das Zwischenstück derart auszubilden und anzuordnen, daß der Fußabschnitt nicht radial hinter dem Kopfabschnitt liegt, sondern in Axialrichtung versetzt, weil sich dabei eine besonders kleine Radialabmessung ergibt.

Ausführungsbeispiele des Gegenstandes der Erfindung werden nachstehend unter Bezugnahme auf die beigefügten Zeichnungen erläutert.

Fig. 1 stellt einen Teilquerschnitt durch die Armatur (es handelt sich um ein Klappenventil) im Bereich des Dichtungselements dar,

Fig. 2 zeigt ähnlich Fig. 1 eine zweite Ausführungsform, und

Fig. 3 ist ein gegenüber Fig. 2 vergrößerter Ausschnitt aus einem entsprechenden Schnitt durch eine dritte Ausführungsform.

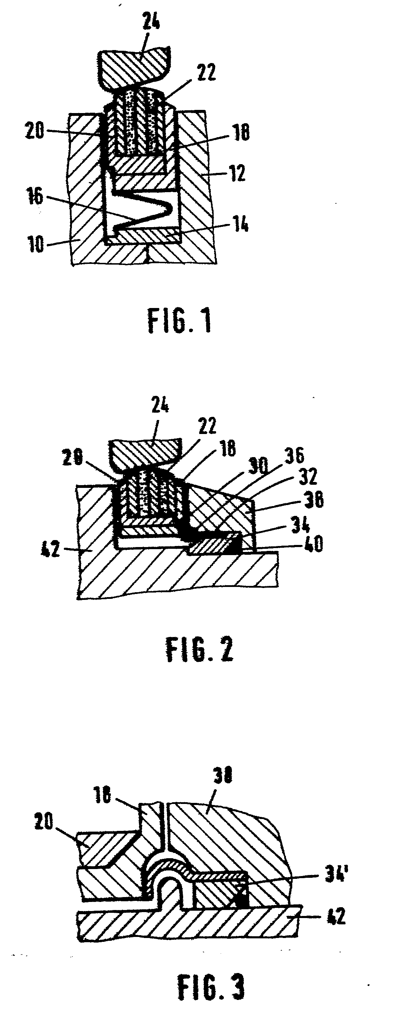

Man erkennt in Fig. 1 zwei Gehäuseteile 10, 12, zwischen denen abdichtend ein Metallring 14 eingespannt ist. Dieser stellt den Fußabschnitt des Dichtungselements dar. Längs einer inneren Umfangskante ist dieser mit einem Faltenbalg 16 verschweißt, bestehend aus einem Blechring mit V-förmigem Querschnitt. Dieser Faltenbalg bildet das Zwischenstück des Dichtungselements. Der andere V-Schenkel ist wiedrum längs des Umfangs mit einem ersten Ring 18 mit L-förmigem Querschnitt verschweißt, in den ein zweiter, ähnlicher Ring spiegelbildlich eingesetzt ist; zwischen diesem Ring 20 und dem Ring 18 wird so eine zum Gehäuseinnern hin offene Nut gebildet, die eine Dichtungsgarnitur 22 aufnimmt. Diese kann aus sandwichartig angeordneten alternierenden Metall- und Weichstoffringen bestehen, wie in der Zeichnung angedeutet. Schließlich erkennt man noch das Absperrglied 24 in Anlage an der Dichtungsgarnitur.

Auch die beiden Ringe 18 und 20 sind miteinander verschweißt, und der Abstand ihrer auswärts gekehrten Radialflächen ist etwas kleiner als die von den beiden Gehäuseteilen 10, 12 begrenzte Nut, so daß sie sich innerhalb dieser Nut radial verlagern können (genauer gesagt, deformieren können). Der Faltenbalg 16 sorgt für die Abdichtung bei gesperrter Armatur, und durch das Einklemmen des Fußabschnitts wird auch ein Durchlecken von Fluid hinter dem Fußabschnitt verhindert.

Fig. 2 zeigt eine andere Anordnung des Faltenbalges, der hier eine im wesentlichen L-förmige Querschnittsform aufweist. Ein radial einwärts gerichteter Schenkel 30 ist mit dem Ring 18 verschweißt, der andere Schenkel 32, gegen die Durchströmungsrichtung axial gerichtet, ist mit dem Fußabschnitt 34 verschweißt. Das Verbindungsstück zwischen beiden weist eine abgerundete Form auf und stützt sich in der einen Endlage der Dichtungsgarnitur 22 an einer komplementären Flanke 36 eines Spannrings 38 ab, in der andern Endlage auf einer komplementären Abschrägung des mittels eines O-Rings 40 abgedichteten Fußabschnitts 34. Der Spannring 38 ist in nicht dargestellter Weise am Gehäusekörper 42 befestigt.

Fig. 3 stellt eine Variante der letztbeschriebenen Ausführungsform dar. Der mit dem Ring 18 verbundene L-Schenkel des Faltenbalges ist radial auswärts gekehrt, so daß der Fußabschnitt 34' beinahe auf demselben Durchmesser des Armaturengehäuses 42 liegt wie der radial äußerste Bereich des Kopfabschnitts 18, 20.

Bei den erfindungsgemäßen Armaturen werden Klappen angewandt, die in der Sperrposition das Dichtungselement in eine elliptische Kontur deformieren, wobei der Vorteil besteht, daß die Dichtungsgarnitur mit ihren Tragringen 18, 20 sich in der Gehäusenut radial verlagern (deformieren) kann, ohne daß die Abdichtwirkung verlorengeht.

## PATENTANSPRÜCHE

1)  Armatur für fluidführende Leitungen mit einem Gehäuse und einem in diesem beweglich angeordneten Absperrorgan, das eine konische Dichtfläche aufweist, sowie mit einem in einer Ringnut des Gehäuses angeordneten Dichtungselement in Ringform, bestehend aus einem im Gehäuse festgelegten Fußabschnitt, einem elastisch deformierbaren Zwischenstück und einem eine Dichtungsgarnitur aufweisenden Kopfabschnitt, dadurch gekennzeichnet, daß das Zwischenstück faltenbalgartig ausgebildet ist.

2)  Armatur nach Anspruch 1, dadurch gekennzeichnet, daß der Fußabschnitt fest im Gehäuse verankert ist.

3)  Armatur nach Anspruch 2, dadurch gekennzeichnet, daß der Fußabschnitt fluiddicht im Gehäuse verankert ist.

4)  Armatur nach Anspruch 1, 2 oder 3, dadurch gekennzeichnet, daß der Kopfabschnitt eine dem Absperrorgan zugewandte Ringnut aufweist, in die die Dichtungsgarnitur eingelassen ist.

5)  Armatur nach Anspruch 4, dadurch gekennzeichnet, daß der Kopfabschnitt aus zwei ineinandergesetzten Ringen mit L-Querschnitt besteht, zwischen deren einwärts ragende Schenkel eine Dichtungsgarnitur eingefügt ist.

6)  Armatur nach einem der vorangehenden Ansprüche, dadurch gekennzeichnet, daß das Zwischenstück mit dem Kopf- und dem Fußabschnitt verschweißt ist.

7) Armatur nach einem der vorangehenden Ansprüche, dadurch gekennzeichnet, daß das Zwischenstück etwa V-förmigen Querschnitt aufweist und mit den freien Enden der V-Schenkel am Kopfabschnitt bzw. am Fußabschnitt befestigt ist.

8) Armatur nach einem der Ansprüche von 1 bis 6, dadurch gekennzeichnet, daß das Zwischenstück etwa L-förmigen Querschnitt aufweist und mit einem radial einwärts gewandten L-Schenkel am Kopfabschnitt, mit einem axial gewandten L-Schenkel an einem Fußabschnitt befestigt ist, der gegenüber dem Kopfabschnitt axial versetzt im Gehäuse festgelegt ist.

9) Armatur nach Anspruch 8, dadurch gekennzeichnet, daß das Zwischenstück zwischen den beiden L-Schenkeln seines Querschnitts ein auswärts abgerundetes Verbindungsteil aufweist.

10) Armatur nach Anspruch 9, dadurch gekennzeichnet, daß der Fußabschnitt einerseits, ein ihn im Gehäuse haltender Montagering andererseits je eine abgerundete Umfangsfläche aufweisen, an denen das Verbindungsteil in radialen Endlagen des Kopfabschnitts anliegt.

11) Armatur nach einem der vorangehenden Ansprüche, dadurch gekennzeichnet, daß die konische Dichtfläche des Absperrorgans die Form eines schiefen Kegelstumpfes hat und daß das Absperrorgan um eine zur Dichtungselementachse senkrecht verlaufende, diese nicht schneidende Schwenkachse drehbar ist.

**FIG. 1**

**FIG. 2**

**FIG. 3**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-1 354 265  (S.E.P.I.) <br> * Seite  1, linke Spalte, Zeilen 9-19 * | 1-3,6 | F 16 K  .1/226 |
| | --- | | |
| X | FR-A-2 398 940  (APPLICATIONS MECANIQUES ET ROBINETTERIE INDUSTRIELLE) <br> * Ansprüche 1,4 * | 1-3,7 | |
| | --- | | |
| X | DE-A-1 425 699  (SAUNDERS VALVE CO. LTD.) <br> * Seite  9, Zeile 17 - Seite 10, Zeile 12 * | 1-3 | |
| | --- | | |
| X | FR-A-  859 489  (J. HEINEN) <br> * Seite  5,  Zeile 98 - Seite 6, Zeile 52 * | 1-3,6 | RECHERCHIERTE SACHGEBIETE (Int. Cl.4) |
| | ----- | | F 16 K    1/00 <br> F 16 K    5/00 |

Der vorliegende Recherchenbericht wurde für alle Patentansprüche erstellt.

| Recherchenort <br> DEN HAAG | Abschlußdatum der Recherche <br> 18-07-1985 | Prüfer <br> DE SMET F.P. |
|---|---|---|